# EUROPEAN PATENT APPLICATION

(11) **EP 1 977 716 A1**
(43) Date of publication of application: **08.10.2008**
(21) Application number: 08006219.3
(22) Date of filing: 31.03.2008
(51) Int. Cl.: A61C 1/07, A61C 5/02, A61C 17/20, A61C 3/03

(54) **Ultrasonic endodontic tip having a low-modulus of elasticity**

(30) Priority: 04.04.2007 US 910096 P; 13.12.2007 US 955487
(71) Applicant: Plastic Endo, LLC, 60089 Il Illinois Buffalo Grove (US)
(72) Inventor: Bahcall, James K., Buffalo Grove, Wisconsin 60089 (US); Olsen, F. Kris, Shorewood, Wisconsin 53211 (US); Fiorina, Mark Arthur, Elm Grove, Wisconsin 53122 (US); Davidson, James A., San Juan Capistrano, California 92675 (US); Fiorina, Mark Andrew, Elm Grove, Wisconsin 53122 (US)
(74) Representative: Englaender, Klaus

(57) **Abstract**

An ultrasonic endodontic tip is provided having an elastic modulus of less than 8 Msi. The low-modulus of the material provides the ultrasonic endodontic tip the ability to navigate a curved tooth canal during a root canal procedure and controllably remove the dentine around canal without excessively enlarging the canal. The tip can include an abrasive on at least a portion of the working surface of the tip.

## Description

### CROSS-REFERENCE TO RELATED APPLICATIONS

This patent application claims the benefit of U.S. Provisional Application No. 60/910,096, filed April 4, 2007, and which is incorporated herein by reference.

### STATEMENT REGARDING FEDERALLY SPONSORED RESEARCH OR DEVELOPMENT

Not applicable.

### FIELD OF THE INVENTION

This invention relates to endodontic instruments, and, in particular, to ultrasonic instruments for endodontic procedures.

### BACKGROUND OF THE INVENTION

A tooth contains one or more roots each having a canal. The canals connect to a pulp chamber and both the canals and the pulp chamber are filled with pulp. The pulp includes blood vessels, nerve tissue, and other cellular bodies. For various reasons, the pulp may become diseased. To eliminate pain, infection, and further degradation of the tooth, any diseased pulp must be removed from the tooth.

Typically, this diseased pulp is removed by an endodontic procedure, commonly known as a root canal. A root canal begins with the removal of a portion of the tooth's enamel and dentine to expose the pulp chamber. Next, the diseased pulp is removed from the pulp chamber and the root canals. Often, not only the soft pulp tissue, but also a portion of the adjacent harder dentine that defines the canal is removed to thoroughly clean the canals. While the controlled removal of some dentine may be necessary to fully clean the canals, the uncontrolled removal of dentine can excessively enlarge the canals and cause complications. Because the tooth canal is often curved, it is difficult to uniformly remove the diseased pulp and some of the surrounding dentine. Once the pulp is removed, the remaining void is filled with an inert biocompatible filling material. The removal and cleaning of the pulp from the canal walls is often performed using either an endodontic file or an ultrasonic endodontic tip. Although they may perform similar tasks, files and tips are different in structure as well as in the way they function.

An endodontic file is an instrument that is used to cut and enlarge the root canal. Endodontic files are tapered blanks of metal, typically stainless steel or nickel-titanium, that are either twisted or machined to form the clinical endodontic file. They are often straight and have surface features that perform the filing action. Although an endodontic file can be used as hand instrument, it is more commonly used in rotary devices.

The selection of a strong, stiff material such as titanium (modulus of elasticity of about 10 Msi) or stainless steel (modulus of elasticity of about 28 Msi) ensures that the file is sufficiently stiff to effectively remove all of the diseased pulp in the root canal. Moreover, the file needs to be strong enough that it is unlikely to fracture as it cleans the canal. Because the file will be under cyclic loading as the file bends and twists as it navigates the root canal, stronger and stiffer materials have been utilized to reduce the possibility of instrumentation fracture. When the file fractures during a root canal procedure, it is not a trivial task for the endodontist to remove the broken piece from the root canal. However, because the file is stiff, it can also have the undesirable effect of preferentially removing excess material, such as dentine, from the canal walls, particularly when the canal is curved. Since the root canal is curved and most files are straight, the file will often remove more tooth material from some areas of the curved root canal than others.

There are numerous patents that describe stiff, metallic endodontic files as meeting the currently perceived needs such as U.S. Pat. Nos. 4,299,571, 5,735,689, 5,882,198, and 5,980,250 by McSpadden, U.S. Pat. Nos. 4,536,159 and 4,611,508 by Roane, and U.S. Pat. No. 4,538,989 by Apairo and Heath. Other patents describe the use of tubular devices using stiff metals such as U.S. Pat. No. 4,135,302 by Kronman and Goldman and U.S. Pat. No. 4,505,676 by Groner. Some patents even describe the use of specific sets of stiff metal devices for cutting and widening the canal in each of the major sections of the canal, such as U.S. Pat. No. 6,558,163 to Riitano.

The prior art has recognized that plastic materials might be used in the construction of endodontic files and other types of dental instruments that are controlled by hand or a rotary device. In U.S. Pat. No. 6,981,869, a single piece, injection-molded brush is described that is capable of removing a smear layer or film in a tooth canal instead of a previously-used chemical surfactant. However, the '869 patent does not contemplate the removal of any of the relatively hard dentine material with the injection-molded brush. In U.S. Pat. No. 6,443,730 to Davidson, an endodontic file composed of a fiber-reinforced polymer is disclosed. However, each of the plastic instruments in these prior art patents are not subject to ultrasonic energy.

In contrast to endodontic files, an ultrasonic endodontic tip works under vibratory action. An ultrasonic endodontic tip is placed in an ultrasonic handpiece and vibrated at high frequencies. Often, the tip is composed of stainless steel and is coated with either diamond or zirconium nitride to improve the tip's cutting efficiency. If the tip makes contact with any tooth material, then the vibration causes the working area of the tip to abrade the tooth material. In the field of endodontics, an ultrasonic endodontic tip may be useful in locating canals, removing post material from previous endodontic operations, removing separated instruments, improving canal access, and preparing root ends for surgery.

Unlike rotary- or hand-controlled endodontic files, the use of a strong, stiff material, such as stainless steel or titanium, has been considered necessary for ultrasonic tips. This is particularly true for endodontic applications, where there is an increased risk of having a broken tip lodged in the tooth if the instrument fails. Because nodes form as the tip vibrates, and these nodes are the locations most susceptible to failure initiation, providing stronger materials throughout the tip has been considered crucial to reducing tip failure rates.

The use of plastic materials, particularly plastic materials having a low modulus of elasticity, in ultrasonic applications has not been recognized in the prior art suitable for use in root canal procedures. In U.S. Pat. No. 5,899,693, a modular ultrasonic scaler for the external cleaning of teeth is disclosed having plastic or metal elements. However, the '693 patent teaches that the plastic material must have a high hardness and high modulus of elasticity in order to properly transmit the ultrasonic energy (col. 5, lines 44-50 and col. 6, lines 60-68). U.S. Pat. No. 7,217,128 discloses an ultrasonic tool having exchangeable metal and plastic tips. The disclosed benefit of having exchangeable tips is that the metal tips can be used for heavy work such as scaling, cleaning, and the like, while the plastic tips can be used for delicate work such as work around the gum lines or around fragile dental work that would otherwise be damaged by metal tips (col. 3, lines 14-24).

Thus, the prior art has not suggested that that low-modulus materials could be used in conjunction with ultrasonic energy to perform the level of abrasive work necessary to perform root canals. It has been believed that low-modulus materials either were incapable of transmitting ultrasonic energy for heavy abrasion or that, if reinforced by fibers, the fibers would cause a degradation in the plastic matrix material and result in tip failure. Moreover, it was believed that the use of a low-modulus material would result in an unacceptable amount of tip failures.

Hence, it would be desirable to provide a dental tool that is capable of controlled cleaning of the root canals and other areas of teeth without the potential for damaging the tools or excessively enlarging the root canal.

### BRIEF SUMMARY OF THE INVENTION

The present invention provides an ultrasonically-driven endodontic tip that is composed of a material or materials having a low modulus of elasticity. The prior art had suggested that an ultrasonic endodontic tip must be made of a stiff material to effectively remove pulp and dentine in procedures such as root canals. It was believed that low-modulus materials could not effectively transmit sonic and ultrasonic frequencies, that they would be incapable of removing harder tooth material such as dentine, and that they would be prone to failure when in use or damage the teeth. However, the inventors have devised an ultrasonic endodontic tip from low-modulus materials that is capable of improved navigation of the root canals for the controlled removal of the dental pulp and the dentine surrounding the root canal. More specifically, the inventors of the present invention have determined that an ultrasonic endodontic tip having an elastic modulus less than 8.0 Msi (55 GPa) can be used advantageously in such applications.

In one form, the tip has a main body extending from a proximal end, configured for attachment to a device that provides ultrasonic energy to the tip, to a distal end. The main body has a working surface that can abrade a portion of the tooth upon contact. The ultrasonic endodontic tip can be driven at ultrasonic frequencies from 10 KHz to 150 KHz and, more specifically, at frequencies between 20 KHz and 40 KHz.

The main body of the tip can be composed of a metal, a polymer, ceramic, or a combination of two or more of these materials having an elastic modulus of less than 8.0 Msi. Metals can be selected from the group consisting of magnesium, lithium, selenium, tellurium, and the like, as well as their respective alloys. It is contemplated that if a polymeric material is selected that the modulus of elasticity of the ultrasonic endodontic tip could be less than 3.5 Msi.

When two or more materials are used, a composite material can be made having a matrix portion and a reinforcing portion. The reinforcing portion can be fiber, nanotube or particulate filler. If the selected material is a polymer, then it can be a fiber-reinforced polymer, such as polyphtalamide with 45% chopped glass fiber.

Additionally, at least a portion of the working surface can have an abrasive or a hardening surface treatment to enhance the abrasive action of the tip in the root canal. At least a portion of the tip can be covered with hard abrasive material such as diamond, silica, silicon carbide, aluminum oxide, zirconium oxide and oxides, nitrides, and borides. It is also contemplated that a hard surface coating or treatment may be used to differentiate the working surface from the bulk of the tip having the low modulus of elasticity.

The tip can be used to perform endodontic procedures involving the root canal. During the procedure, the ultrasonic endodontic tip will exert minimal radial force such that the tip is generally confined to removing tooth material in the intended work zone of the root canal. During the procedure, the ultrasonic endodontic tip is capable of removing the both dental pulp and dentine.

These and other features and advantages of the invention will appear in the detailed description which follows. In the description, reference is made to the accompanying drawings which illustrate one or more preferred embodiments of this invention.

### BRIEF DESCRIPTION OF THE DRAWINGS

Fig. 1 is side view of an ultrasonic endodontic tip according to the present invention;

Fig. 2 is a bottom view of the ultrasonic endodontic tip of Fig. 1 that shows the bottom of the connecting end;

Fig. 3 is an alternative view of the ultrasonic endodontic tip of Fig. 1 that reveals the location of a water outlet;

Fig. 4 is an environmental view of the ultrasonic endodontic tip in an ultrasonic handpiece;

Fig. 5 is a side view of a tooth having an imperfection that has resulted in the pulp of the tooth becoming diseased;

Fig. 6 is a side view of the ultrasonic endodontic tool performing a root canal procedure; and

Figs. 7-10 are side views of the ultrasonic endodontic tip having a variety of different tip geometries.

### DETAILED DESCRIPTION OF THE PREFERRED EMBODIMENTS

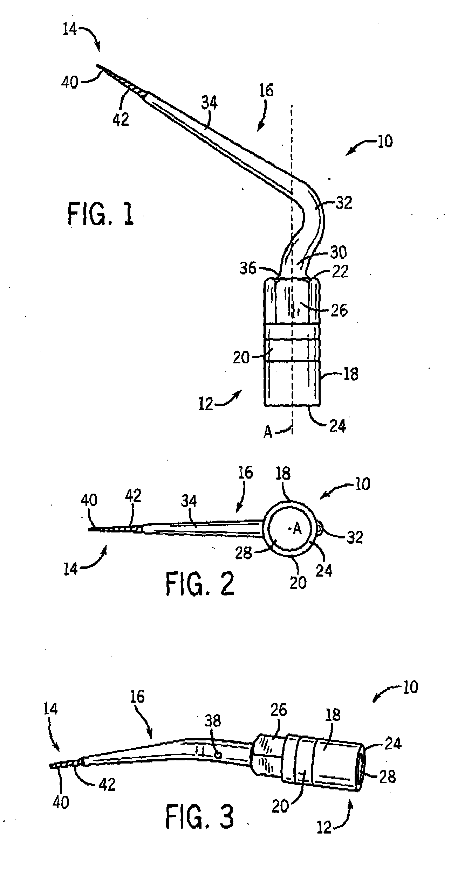

Referring now to the drawings, an endodontic tip 10 is shown in Figs. 1, 2 and 3. The endodontic tip 10 extends from a proximal end 12 to a distal end 14. The endodontic tip has a main body 16. At the proximal end 12, there is a connecting end 18 that is cylindrically-shaped and axially oriented along and concentric about an axis A. The connecting end 18 has a cylindrical surface 20 as well as a first circular face 22 and a second circular face 24 that are parallel to one another. A pair of flat surfaces 26 is formed in the cylindrical surface 20 on the end nearest to the first circular face 22. The pair of flat surfaces 26 is parallel to each other. There is also an internal threading 28 axially aligned with axis A that is accessible from the second circular face 24.

The main body 16 protrudes from the first circular face 22 of the connecting end 18. The main body 16 has a first curving portion 30 that extends away from axis A and the distal end 14 as it protrudes from the first circular face 22. The first curving portion 30 transitions into a second curving portion 32 that extends back towards axis A and the distal end 14. The second curving portion 32 transitions into a straight portion 34 that extends toward the distal end 14. The diameter of the first curving portion 30, the second curving portion 32, and the straight portion 34 does not need to be uniform, and, as shown, will narrow as they extends from the proximal end 12 to the distal end 14. There may be a transitional radius 36 between the first curving portion 30 and the first circular face 22. A water outlet 38 may be located at an intermediate location on the main body 16.

At the distal end 14 of the straight portion 34 there is a working tip 40 having a working surface 42. As shown in Figs. 1, 2, and 3, the working tip 40 is slightly more narrow than the straight portion of the main body 16. As will be discussed below, the working tip 40 may have various geometric configurations and may either be composed of a material different from the material or materials composing the rest of the endodontic tip 10 or may be composed of the same material as the rest of the endodontic tip 10.

The known ultrasonic endodontic tips have been composed of materials having elastic moduli greater than 8.0 Msi. For example, it is well known to fabricate ultrasonic endodontic tips from titanium and stainless steel. Titanium has an elastic modulus of about 16.5 Msi (115 GPa). Stainless steel has an elastic modulus of about 28 Msi (190 GPa). Even the known, and relatively new, endodontic tip manufactured from "memory metal" alloys such as nitinol (NiTi) and titanium-molybdenum alloys (TMA or TiMo) have elastic moduli above 9 Msi. Such relatively high-modulus materials have been considered essential to transmit the ultrasonic energy, to provide the necessary cutting action to clean the root canals, and to reduce the possibility of the tip fracturing.

However, in the present invention, the main body 16 is composed of a material having an elastic modulus less than 8.0 Msi (55 GPa). This material may be a metal, a polymer, ceramic or a combination of two or more of the materials to form a composite material. It is also contemplated that two low-modulus materials may be combined in a single embodiment. For example, a magnesium alloy core could be coated with a polymer having an abrasive. It is also contemplated that the working tip 40 could be a low modulus metal with the remainder of the endodontic tip 10 being composed of low modulus plastic or composite material.

Some metals that can be used in the present invention include magnesium (6.4 Msi, 44 GPa), lithium (2 Msi, 14 GPa), selenium (8 Msi, 55 GPa), tellurium (6 Msi, 42 GPa), and the like, as well as their respective alloys. Some of the alloying metals include, but are not limited to, aluminum, titanium, zirconium, copper, zinc, tin, silver and niobium. Although the list of alloying metals includes individual metals having elastic moduli greater than 8.0 Msi, the metal alloy that is used in the endodontic tip must have an elastic modulus less than 8 Msi.

It is also contemplated that if the material is a polymer, that it may have an elastic modulus of less than 3.5 Msi (24.2 GPa). For example, nylon has an elastic modulus of about 0.3 Msi (2.1 GPa), PET has an elastic modulus of about 0.32 Msi (2.2 GPa), polystyrene has an elastic modulus of about 0.45 Msi (3.2 GPa), and polyethylene has an elastic modulus of about 0.07 Msi (0.5 GPa). Both thermoplastics and thermosets are appropriate for this invention, and include, but are not limited to, epoxies, phenolics, methylmethacrylates, acrylics, phenolics, polyolefins, polysulphones, polyetherketones, nylons, polyesters, polyamides, combinations of different polymers, and the like.

Additionally, carbon nanotube or standard fiber reinforcement may be used to increase the strength and toughness of the material. For example, glass, carbon, Kevlar, and other ceramic fibers may be embedded into the low-modulus matrix material to enhance the overall material properties. For example, in one embodiment of the present invention, the endodontic tip is composed of a fiber-reinforced polymer containing polyphtalamide with 45% chopped glass fiber content. It is also contemplated that other fiber-reinforced polymers, such as polyamideimide with 30% carbon fiber content could be used. In particular, composite materials that are fatigue resistant and that will not significantly degrade as the temperature of ultrasonic endodontic tip 10 increases due to frictional heating will be considered desirable for this invention.

At least a portion of the working surface 42 can be covered by a hard abrasive. The hard abrasive can include diamond, silica, silica carbide, aluminum oxide, zirconium oxide, and the like, as well as other oxides, nitrides and borides. Although it is not necessarily required that an abrasive be present, in the case where the main body 16 is a polymer, the presence of an abrasive can increase the level of effectiveness of the endodontic tip 10. The abrasive material and its grit size can be selected to provide a tip capable of providing the desired amount of abrasive machining for the procedure to be performed.

The abrasive material may be applied in a number of ways. The abrasive material can be applied to the portion of the working surface 42 using a process such as electroplating. Alternatively, the abrasive can be affixed to the portion of the working surface 42 using an adhesive or an epoxy. The abrasive material might also be mixed into the bulk of the material to form a composite material that provides the abrasive material on the surface of the tip.

It is also contemplated that in some situations, a hard abrasive might not be required or may be replaced with a hard surface coating such as chromium or the like. Additionally, it is contemplated that other means of hardening the surfaces may also provide a hard surface that is capable of abrading a tooth.

In the case where more than one material is used to form the main body 16, the first material may have an elastic modulus less than 8.0 Msi and the second material may also have an elastic modulus less that 8.0 Msi. Alternatively, the combined elastic modulus of the materials when combined can be less than 8.0 Msi overall, even though one or more of the constituent materials has an elastic modulus greater than 8.0 Msi.

It should be appreciated that the endodontic tip 10 described may include the described features, as well as those known to others in the art. For example, the embodiment shown in Figs. 1, 2, and 3 has the water outlet 38 for flushing the working area. The water outlet 38 may also keep the endodontic tip 10 covered in water, which can improve the cutting action of the tip as will be described below. Other such features may be added or adapted for the inventive tip. Moreover, as will be described in further detail below, the working tip 40 may have varying geometries suitable for different endodontic procedures and applications.

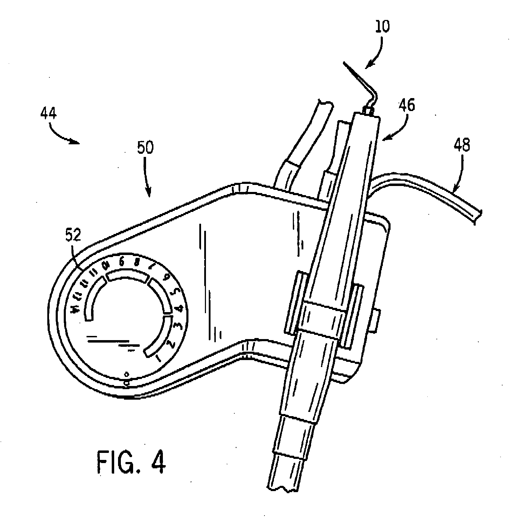

Fig. 4 shows an environmental view of the endodontic tip 10 in an ultrasonic instrument 44. The ultrasonic instrument 44 includes a handpiece 46, cords 48, and a drive unit 50 having a dial 52. A tool can be used to engage the pair of flat surfaces 26 to tighten the internal threading 28 of the connecting end 18 of the endodontic, tip 10 into the handpiece 46. Once the endodontic tip 10 is secured in the handpiece 46, the drive unit 50 can supply sonic or ultrasonic energy to the endodontic tip 10 secured in the handpiece 46 via the cords 48.

The drive unit 50 can supply the energy in a variety of ways. For example, the sonic or ultrasonic energy can be supplied electromechanically, through the use of a piezoelectric material, or other types of transducers. The ultrasonic energy may also be coupled with reciprocating or rotary drives to enhance the cutting action as is known to those skilled in the art.

The frequency of the sonic or ultrasonic vibrations can be controlled using the dial 52. Generally, human hearing only extends to around 20 kilohertz. Any frequencies above that range will typically be inaudible and therefore defined as "ultrasonic." In typical operation, the frequency of the supplied ultrasonic vibrations will be in the range of 20 kilohertz to 40 kilohertz. However, it is contemplated that frequencies in the range of 10 kilohertz to 150 kilohertz could be provided depending on the abrasive qualities of the endodontic tip being used or the endodontic tip's particular operation.

The sonic or ultrasonic energy driving the endodontic tip 10 cycles the endodontic tip 10 between multiple points very quickly. Although the endodontic tip 10 does not move very far, the high frequency at which the endodontic tip travels between the points means that any stationary surface that the endodontic tip encounters, such as a tooth, will likely be abraded by the tip assuming the tip has sufficient abrasive qualities. The abrasive material, its grit size, and the frequency at which the tip is driven will all effect the cutting action and rate of material removal of the endodontic tip.

It is also contemplated that rotational motion of the endodontic tip 10 can be beneficial to the cutting action. This is referred to those skilled in the art as rotary ultrasonic machining (RUM). It is contemplated that modifications may be may to the disclosed design to incorporate provide ultrasonic vibration simultaneously with rotational movement to the working tip 40 to improve the rate at which the tooth material is removed.

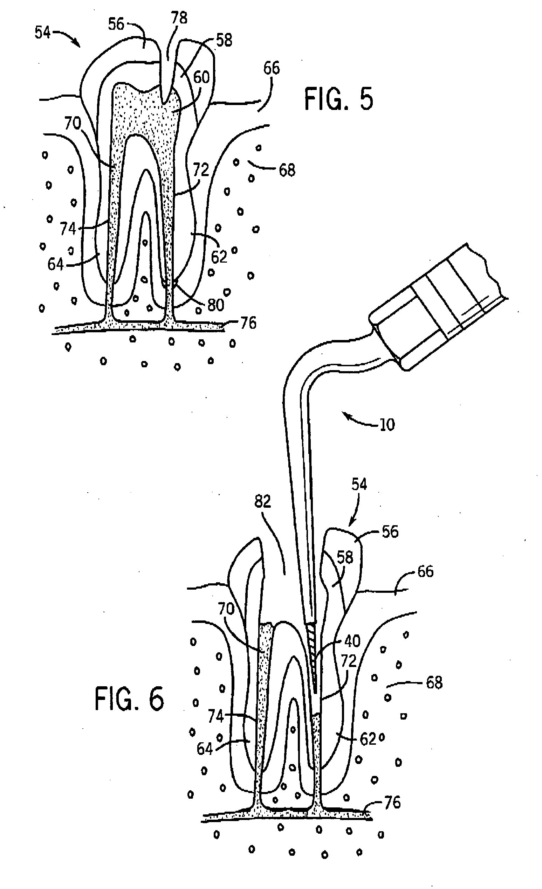

Turning now to Figs. 5 and 6, a portion of a root canal procedure is shown. In Fig. 5, a diseased tooth 54 is shown. The diseased tooth 54 has enamel 56, dentine 58 and a pulp chamber 60. The diseased tooth 54 also has a first root 62 and a second root 64 which are embedded into gums 66 that are located adjacent to a bone 68. The pulp chamber 60 includes pulp 70 containing blood vessels, nerves tissue, and other cellular bodies and extends down into a first root canal 72 of the first root 62 and a second root canal 74 the second root 64, through the gums 66 and into a bundle of blood vessels and nerves 76. In Fig. 5, the diseased tooth 54 has an imperfection 78 that has resulted in damage to the enamel 56, the dentine 58, and the pulp chamber 60. In this particular case, an area of agitation 80 has also occurred at the bottom of the first root 62 because of damage to the pulp 70.

Fig. 6 shows the diseased tooth 54 being engaged by the ultrasonic tip 10 during a root canal procedure. A portion of the enamel 56 and dentine 58 has been removed to expose the pulp chamber 60. The ultrasonic tip 10 has cleaned the pulp chamber 60, leaving a void 82. The ultrasonic tip 10 is shown in at a location in the first root canal 72 of the diseased tooth 54. The ultrasonic tip 10 evacuates the pulp 70 from the first root canal 72. Because the pulp 70 may tend to adhere to the walls of the root canals 72 and 74, it is important that the ultrasonic tip 10 abrade the walls of the root canals 72 and 74 and even controllably remove some amount of the dentine 58 surrounding the root canals 72 and 74. Because any amount of pulp 70 that remains in the root canals 72 and 74 may cause later aggravation, it is important that the root canals 72 and 74 be thoroughly cleaned by the endodontic tip 10. Once the pulp 70 is removed, the void 82 in the diseased tooth 54 can be filled with an inert, biocompatible material.

It should be appreciated that because the main body 16 of the endodontic tip 10 has a low modulus of elasticity, the endodontic tip 10 is capable of flexibly navigating the root canals 72 and 74 while the working tip 40 controllably removes some amount of dentine 58. Because the endodontic tip 10 is composed of a material having a low modulus of elasticity, the endodontic tip 10 exerts only minimal radial forces as it navigates the curves of the root canals 72 and 74. Thus, the endodontic tip 10 is less prone to preferentially remove dentine 58 along only certain potions of the root canals 72 and 74. If the main body 16 was sufficiently stiff, then the working tip 40 would be forced to remove material along a straight line. If the root canal of interest is curved and the main body 16 and working tip 40 was sufficiently stiff, then the working tip 40 might not uniformly and controllably remove the dentine 58 defining the root canal walls. This could result in damage to the roots 62 and 64 of the diseased tooth 54 if the working tip 40 came out the side of one of the roots 62 and 64 or otherwise initiate the fracture of a portion of one of the roots 62 and 64.

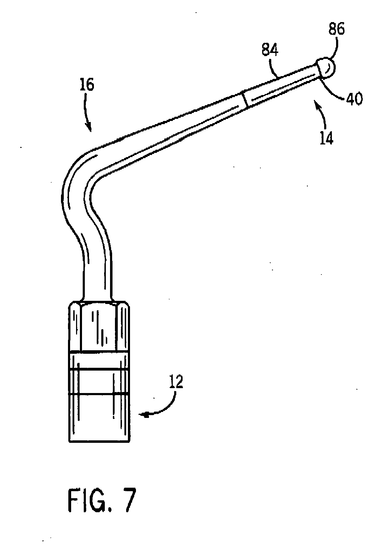

Referring now to Figs. 7-10, various embodiments of the ultrasonic endodontic tip 10 are shown, each of which have a different geometry for the working tip 40. Although various tip geometries are shown, Figs. 7 - 10 are not intended to limit the scope of the application to only the disclosed embodiments. Other tip geometries known to those skilled in the art may also be combined with the present invention. Moreover, it is contemplated that the working tip 40 in each of Figs. 7-10 can be composed of a material such as a low-modulus metal while the remainder of the endodontic tip 10 is composed of a low-modulus plastic or plastic composite material. However, other low-modulus materials selections and combinations are also contemplated, including the composition of the working tip 40 and the remainder of the endodontic tip 10 being composed of the same low-modulus material.

Fig. 7 shows a working tip 40 having an abrasive-covered straight portion 84 that extends to a bulbous end portion 86 positioned at a location nearest to the distal end 14. Such a tip geometry might be appropriate when the working tip 40 must be capable of navigating into an area of the tooth that is not easily accessible with a straight tip.

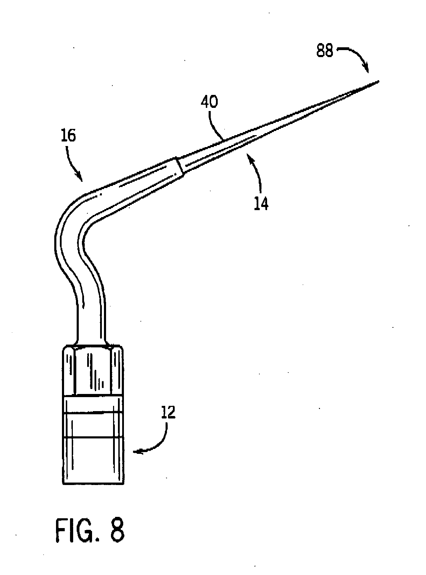

Fig. 8 shows a working tip 40 that is straight and has a sharp pointed tip 88 on the distal end 14. Such a tip geometry is desirable when the working tip 40 will be removing small amounts of material at a specific point on the tooth.

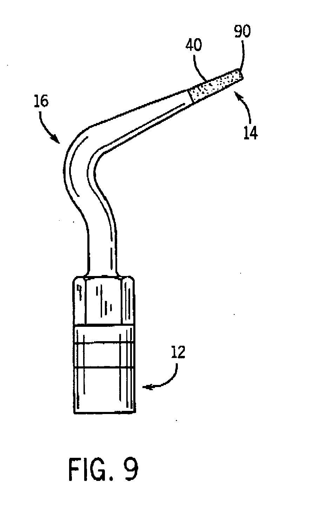

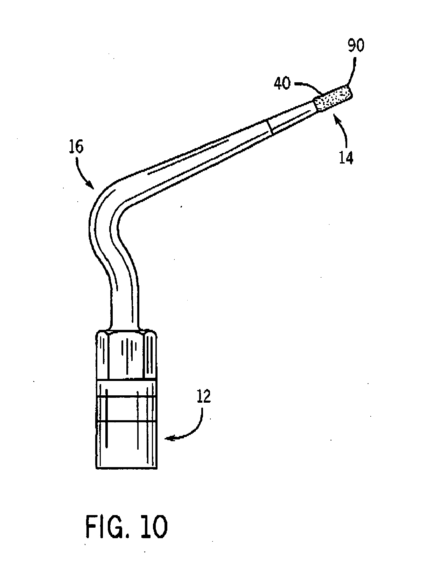

Figs. 9 and 10 show a working tip 40 that has a blunt tip 90. Such a tip geometry may be advantageous for the rough removal of tooth material near the surface of a tooth or in larger volumes where the precision of the cutting action is less significant

Although not shown, the invention could also include a working tip 40, that extends in a direction not parallel to the straight portion 34 of the main body 16. Because the working tip would be oriented at an angle relative to the straight portion 34, this particular embodiment may be preferred for operations in which the direction of cutting would require holding the handpiece 46 in a position that is difficult to achieve or where the handpiece 46 or the main body 16 of the endodontic tip 10 would interfere with the tooth or other part of the mouth of the individual being worked on.

Although not shown, it is also contemplated that the working tip 40 could have some amount of curvature to assist it in flexibly navigating of the root canals 72 and 74. Such a modification could be made only to the working tip 40, or could also be made structural modifications to the main body 16.

It is specifically intended that the present invention not be limited to the embodiments and illustrations contained herein, but include modified forms of those embodiments including portions of the embodiments and combinations of elements of different embodiments as come within the scope of the following claims.

The invention discloses an ultrasonic endodontic tip having an elastic modulus of less than 8 Msi. The low-modulus of the material provides the ultrasonic endodontic tip the ability to navigate a curved tooth canal during a root canal procedure and controllably remove the dentine around canal without excessively enlarging the canal. The tip can include an abrasive on at least a portion of the working surface of the tip.

## Claims

1. An ultrasonic endodontic tip comprising a main body extending from a proximal end configured for attachment to an ultrasonic energy providing device to a distal end, the main body having a working surface, wherein the main body is composed of a material having a modulus of elasticity less than 8.0 Msi.

2. The ultrasonic endodontic tip of claim 1, wherein at least a portion of the working surface is covered by a hard abrasive.

3. The ultrasonic endodontic tip of claim 2, wherein the main body is composed of a metal.

4. The ultrasonic endodontic tip of claim 3, wherein the metal is selected from the group consisting of magnesium, lithium, selenium, tellurium, magnesium alloys, lithium alloys, selenium alloys, and tellurium alloys.

5. The ultrasonic endodontic tip of claim 2, wherein the main body is composed of a polymer.

6. The ultrasonic endodontic tip of claim 5, wherein the polymer has an elastic modulus less than 3.5 Msi.

7. The ultrasonic endodontic tip of claim 2, wherein the main body is composed of a metal and a polymer.

8. The ultrasonic endodontic tip of claim 2, wherein the main body is composed of a fiber-reinforced polymer.

9. The ultrasonic endodontic tip of claim 2, wherein the main body is tapered from the proximal end to the distal tip, the main body is composed of a composite material comprising a matrix portion and a reinforcing portion;
where the matrix portion is selected from the group consisting of a thermoset, a thermoplastic, and a ceramic;
where the reinforcing portion is selected from the group consisting of a fiber, a nanotube, and a particulate filler; and
the hard abrasive is diamond.

10. The ultrasonic endodontic tip of claim 2, wherein the hard abrasive is selected from a group consisting of diamond, silica, silicon carbide, aluminum oxide, zirconium oxide and oxides, nitrides, and borides.

11. The ultrasonic endodontic tip of one of claims 1 to 10, wherein a hard surface coating is located on the working surface.

12. The ultrasonic endodontic tip of one of claims 1 to 11, wherein the ultrasonic energy providing device is operates within a range of 10 KHz to 150 KHz.

13. The ultrasonic endodontic tip of claim 12, wherein the ultrasonic energy providing device is operates within a range of 20 KHz to 40 KHz.

14. The ultrasonic endodontic tip of one of claims 1 to 13, wherein the material of the main body includes a first material and second material, the first material having a modulus of elasticity below 8.0 Msi and the second material having a modulus of elasticity below 8.0 Msi.

15. The ultrasonic endodontic tip of one of claims 1 to 14, wherein the main body is non-modular.

16. A method of performing an endodontic procedure using an ultrasonic device comprising using the ultrasonic device to produce ultrasonic energy to drive a working tip, the working tip having a main body with a working surface at a distal end, the main body composed of a material having an elastic modulus of less than 8.0 Msi wherein the working surface of the working tip engages a tooth canal during the endodontic procedure and removes a material in the tooth canal.

17. The method of claim 16, wherein the working surface of the working tip exerts a radial force only capable of removing material within the tooth canal inside an intended work zone.

18. The method of claim 16 or 17, wherein the material is root pulp.

19. The method of claim 16, wherein the material is dentine.

20. An ultrasonic endodontic tip comprising:
a connecting end configured to be coupled to an ultrasonic device that provides ultrasonic energy, the connecting end having an axis defined by a direction that the ultrasonic tool exerts the ultrasonic energy to the connecting end;
a curved section extending from the connecting end, the curved section first curving away from the axis of the connecting end and then curving back towards the axis;
a straight tapered section extending from the curved section, the straight tapered section having a decreasing diameter as it extends away from the curved section; and
a working section extending from the straight tapered section, the working section having a hard abrasive;
wherein the ultrasonic endodontic tip is composed of a material having a modulus of elasticity less than 8.0 Msi.
